(19)

(11) **EP 3 176 661 B1**

(12) **EUROPEAN PATENT SPECIFICATION**

(45) Date of publication and mention of the grant of the patent:
**23.01.2019 Bulletin 2019/04**

(51) Int Cl.:
***G05B 19/416*** *(2006.01)* ***H02P 29/20*** *(2016.01)*

(21) Application number: **16200740.5**

(22) Date of filing: **25.11.2016**

(54) **PROFILE GENERATION APPARATUS, CONTROL METHOD FOR PROFILE GENERATION APPARATUS, CONTROL PROGRAM, AND STORAGE MEDIUM**

PROFILERZEUGUNGSVORRICHTUNG, STEUERUNGSVERFAHREN FÜR PROFILERZEUGUNGSVORRICHTUNG, STEUERUNGSPROGRAMM UND SPEICHERMEDIUM

APPAREIL DE GÉNÉRATION DE PROFIL, PROCÉDÉ DE COMMANDE POUR APPAREIL DE GÉNÉRATION DE PROFIL, PROGRAMME DE COMMANDE ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2015 JP 2015235082**

(43) Date of publication of application:
**07.06.2017 Bulletin 2017/23**

(73) Proprietor: **OMRON CORPORATION**
**Kyoto, Kyoto 600-8530 (JP)**

(72) Inventor: **KOGA, Tatsuya**
**Kyoto**
**Kyoto 600-8530 (JP)**

(74) Representative: **Horn Kleimann Waitzhofer Patentanwälte PartG mbB**
**Ganghoferstrasse 29a**
**80339 München (DE)**

(56) References cited:
**WO-A1-2011/042049**

- **Kim Doang Nguyen ET AL: "On Algorithms for Planning S-Curve Motion Profiles", International Journal of Advanced Robotic Systems, March 2008 (2008-03), pages 11-8806, XP055364644, DOI: 10.5772/5652 Retrieved from the Internet: URL:http://cdn.intechopen.com/pdfs/4267.pd f [retrieved on 2017-04-13]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD

The present invention relates to a profile generation apparatus that generates a velocity profile to be input into a controller.

BACKGROUND

In controlling the operations of machines or equipment, a machine or equipment may have large inertia and be driven at high speed. In this case, the machine or equipment is driven at high speed using large torque, and thus using large power.

When the use of power increases momentarily, or the power peaks, an insufficient amount of power can be momentarily output from the power supply system. To respond to such momentary power insufficiency, the power supply system may be upsized. However, changing the power supply system for upsizing is not easy and is unrealistic.

One method to prevent such momentary power insufficiency is the temporary storage of power with, for example, a flywheel as energy for later use. When the power is still insufficient, the tact time may be slowed.

Further, torque insufficiency may also occur in moving a large object. In this case, the object may be driven with a large motor, or may be operated at low speed.

Patent Literature 1 describes a technique for reducing power. Patent Literature 2 describes a technique for optimizing a trapezoidal velocity profile. WO2011/042049A1 relates to a energy optimized profile generation system generating a trapezoidal profile with respect to a designated target time. Kim Doang Nguyen ET AL: "On Algorithms for Planning S-Curve Motion Profiles", International Journal of Advanced Robotic Systems, 1 March 2008, DOI: 10.5772/5652, relates to higher order polynomial S-curve motion profiles.

CITATION LIST

PATENT LITERATURE

Patent Literature 1: Japanese Translation of PCT International Application Publication No. 2014-517673 (published on July 17, 2014)

Patent Literature 2: Japanese Unexamined Patent Application Publication No. 2012-173900 (published on September 10, 2012)

SUMMARY

TECHNICAL PROBLEM

The technique described in Patent Literature 1 reduces power by varying the time when a control target reaches a target position and calculating the time with a minimum square sum of power. This technique does not allow designation of the time, and is thus not applicable to an apparatus that moves a target object to a predetermined position within the time designated by a user.

The technique described in Patent Literature 2 simply optimizes the trapezoidal curve of the velocity profile, and does not intend to reduce power and thus may not optimize the use of power.

The two techniques are both associated with the total power, and do not intend to lower peaks.

In response to the above issue, one or more aspects of the present invention are directed to a profile generation apparatus that generates a velocity profile used in controlling a machine to lower a torque peak or a power peak, and to control a control target to reach a predetermined position within an intended time.

SOLUTION TO PROBLEM

In response to the above issue, a profile generation apparatus according to one aspect of the present invention generates an input profile used in controlling a machine. The profile generation apparatus includes an input reception unit, a profile calculation unit, and a profile generation unit. The input reception unit receives input of a designated drive time from a user. The designated drive time is a time taken by a control target to move to a predetermined position. The profile calculation unit calculates a calculation profile including a leading edge portion, a flat portion, and a trailing edge portion. The calculation profile is determined based on a principle of least action to minimize a total torque or a total power used to control the control target or to reduce the total torque and the total power. The calculation profile causes a velocity to be zero when the designated drive time received by the input reception unit passes. The profile generation unit generates, as the input profile, a velocity profile indicating a relationship between a velocity of the control target and a time based on the calculation profile calculated by the profile calculation unit.

The above structure uses the calculation profile determined based on the principle of least action, and thus reduces the power consumption or reduces the total torque. The apparatus can move a target object to a predetermined position within a drive time designated by the user. In other words, the apparatus can move a target object to a target position at a target time while reducing the power consumption or the total torque.

The profile with the flat portion can accommodate velocity limitations. When the designated drive time is changed, the flat portion can be extended or shortened.

This eliminates complicated re-calculation, and can reduce the workload.

The input reception unit receives input of an evaluation function from the user, and the profile calculation unit calculates the calculation profile to minimize at least one of the total torque or the total power used to control the control target using the evaluation function.

The above structure can calculate the calculation profile using the received evaluation function. With an evaluation function that minimizes the total power consumption, a calculation profile to lower the power consumption peak can be obtained. With an evaluation function that minimizes the total torque, a calculation profile to lower the torque peak can be obtained. With an evaluation function combining a function to minimize the total power consumption and a function to minimize the total torque at an intended ratio, a calculation profile to lower both the power peak and the torque peak can be obtained.

The profile generation unit generates the input profile based on the calculation profile calculated by the profile calculation unit having the leading edge portion with an inflection point at which the leading edge portion changes from being concave downward to being concave upward.

When a machine starts moving, the machine typically has static friction and thus typically has a larger friction than estimated in the model. A profile calculated simply based on the principle of least action thus shows a large torque peak when the machine starts moving. The above structure uses the profile with a less steep leading edge, and thus can slow the machine at the start, and thus can reduce the torque peak when the machine starts moving.

The profile generation unit shortens the designated drive time and calculates a moving average corresponding to the shortened drive time to generate the input profile having the inflection point.

The above structure simply calculates the moving average to generate the input profile having the leading edge portion with the inflection point at which the leading edge portion changes from being concave downward to being concave upward.

The profile generation unit generates the input profile by combining the leading edge portion of the calculation profile calculated by the profile calculation unit with a leading edge portion of a 4th or higher order curve at a predetermined ratio, and combining the trailing edge portion of the calculation profile with a trailing edge portion of the 4th or higher order curve at the predetermined ratio.

The 4th or higher order curve profile typically enables control with less torque vibrations. The above structure can generate the input profile by combining the leading edge portion of the calculation profile with a leading edge portion of the 4th or higher order curve, and combining the trailing edge portion of the calculation profile with a trailing edge portion of the 4th or higher order curve. This structure lowers the torque peak and reduces vibrations in the machine.

The input reception unit receives input of the ratio from the user.

The above structure allows the user to set the ratio at which the leading edge portion of the calculation profile is combined with the leading edge portion of the 4th or higher order curve, and the ratio at which the trailing edge portion of the calculation profile is combined with the trailing edge portion of the 4th or higher order curve. The user can thus designate whether to lower the torque peak more or to reduce machine vibrations more.

The profile generation unit at least either differentiates the generated velocity profile to generate an acceleration profile showing a relationship between an acceleration of the control target and a time, or integrates the generated velocity profile to generate a position profile showing a relationship between a position of the control target and a time.

The above structure uses the acceleration profile or the position profile to control the machine.

In response to the above issue, a control method according to another aspect of the present invention is used for a profile generation apparatus that generates an input profile used in controlling a machine. The control method includes an input reception process, a profile calculation process, and a profile generation process. The input reception process includes receiving input of a designated drive time from a user. The designated drive time is a time taken by a control target to move to a predetermined position. The profile calculation process includes calculating a calculation profile including a leading edge portion, a flat portion, and a trailing edge portion. The calculation profile is determined based on a principle of least action to minimize a total torque or a total power used to control the control target or to reduce the total torque and the total power. The calculation profile causes a velocity to be zero when the designated drive time received in the input reception process passes. The profile generation process includes generating, as the input profile, a velocity profile indicating a relationship between a velocity of the control target and a time based on the calculation profile calculated in the profile calculation process.

The control method produces the same advantageous effects as the structure described above.

The profile generation apparatus according to the above aspect of the present invention may be a computer. In this case, the computer functions as the components (software components) of the profile generation apparatus. Another aspect of the present invention is a control program for the profile generation apparatus that is a computer. A still another aspect of the present invention is a computer-readable storage medium storing the control program.

ADVANTAGEOUS EFFECTS

One or more embodiments of the present invention use the calculation profile determined based on the principle of least action, and thus reduce the power consumption or reduce the total torque. The structure of the embodiments can move a target object to a predetermined position within a drive time designated by the user. In other words, the structure of the embodiments can move a target object to a target position at a target time while reducing the power consumption or the total torque.

The profile with the flat portion can accommodate velocity limitations. When the designated drive time is changed, the flat portion can be extended or shortened. This eliminates complicated re-calculation, and can reduce the workload.

BRIEF DESCRIPTION OF THE DRAWINGS

Fig. 1 is a block diagram showing the main components of a controller according to one embodiment of the present invention.

Fig. 2 is a diagram showing an overview of a control system including the controller.

Fig. 3 is a diagram showing the structure of the control system in detail.

Fig. 4 is a schematic diagram showing the hardware configuration of a support apparatus included in the control system.

Fig. 5 is a flowchart showing the processing for generating an input profile (a velocity profile, a position profile, or an acceleration profile) performed by the controller.

Fig. 6A is a graph showing the relationship between the position of a control target and the time when an example velocity profile shown in Fig. 6B is input into the apparatus, and Fig. 6B is a diagram showing the velocity profile (input profile) generated based on the principle of least action.

Fig. 7A is a graph showing the relationship between the position of the control target and the time when an example velocity profile shown in Fig. 7B is input into a servo driver, and Fig. 7B is a diagram showing the velocity profile (input profile) calculated based on the principle of least action with the limited velocity.

Fig. 8A is a graph showing the relationship between the position of the control target and the time, and Fig. 8B is a diagram showing a velocity profile with trapezoidal velocity control in comparison with the velocity profiles shown in Figs. 6B and 7B.

Fig. 9A is a graph showing the relationship between the position of the control target and the time corresponding to velocity profiles shown in Fig. 9B, Fig. 9B is a diagram showing the velocity profiles, and Fig 9C is a graph showing the relationship between the torque state and the time corresponding to the velocity profiles shown in Fig. 9B, with proposed method A using an evaluation function for lowering a torque peak.

Fig. 10A is a graph showing the relationship between the position of the control target and the time corresponding to velocity profiles shown in Fig. 10B, Fig. 10B is a diagram showing the velocity profiles, and Fig 10C is a graph showing the relationship between the power consumption state and the time corresponding to the velocity profiles shown in Fig. 10B, with proposed method A using an evaluation function for lowering a power peak.

Fig. 11A is a diagram showing the relationship between the friction and the velocity in a typical friction model, and Fig. 11B is a diagram showing the relationship between the friction and the velocity for a typical machine.

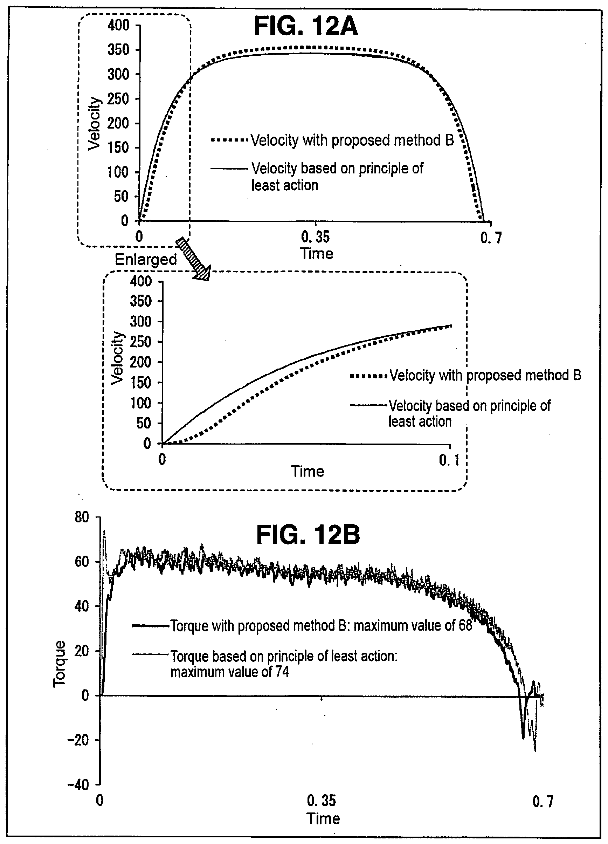

Fig. 12A is a diagram showing an example velocity profile generated with proposed method B using an evaluation function for lowering a torque peak, and an example velocity profile generated with proposed method A using an evaluation function for lowering a torque peak, and an enlarged view of the leading edges of the two profiles, and Fig. 12B is a diagram showing a torque state corresponding to the profile generated with proposed method B using an evaluation function for lowering a torque peak, and a torque state corresponding to the profile generated with proposed method A using an evaluation function for lowering a torque peak.

Fig. 13 is a diagram describing a method for generating a velocity profile with less vibrations.

Fig. 14A is a graph showing the relationship between the position of the control target and the time for each profile shown in Fig. 14B, Fig. 14B is a diagram showing a velocity profile generated with proposed method C using an evaluation function for lowering a torque peak, a velocity profile generated with proposed method A using an evaluation function for lowering a torque peak, and a velocity profile generated with trapezoidal jerk velocity control, and Fig 14C is a graph showing the relationship between the torque and the time for each profile shown in Fig. 14B.

Fig. 15 is a diagram describing a velocity profile generated by combining a limited velocity profile with proposed method A with a 4-1-4th order curve velocity profile.

DETAILED DESCRIPTION

An embodiment of the present invention will be described in detail. A control system according to the present embodiment includes a controller (profile generation apparatus) 1, which generates a velocity profile (or a position profile or an acceleration profile) to move a control target to a target position at a target time and to reduce the power consumption (total power) or the torque (total torque), and a servo driver 3, into which the generated velocity profile (or a position profile or an acceleration profile) is input. The servo driver 3 then drives a servomotor 4, which then moves the control target. The velocity profile is the locus indicating the relationship between the velocity of the control target and the time. The position profile is the locus indicating the relationship between the position of the control target and the time. The acceleration profile is the locus indicating the relationship between the acceleration of the control target and the time. Although the system in the present embodiment includes the servo driver 3, the controller 1 may input the generated profile into any other device that can control a control target using the profile, such as a temperature controller.

Control System Overview

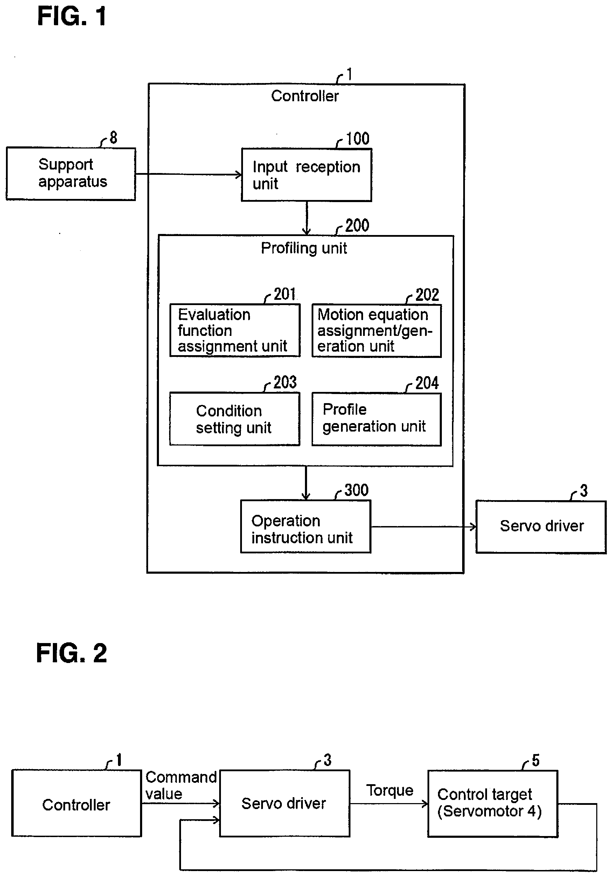

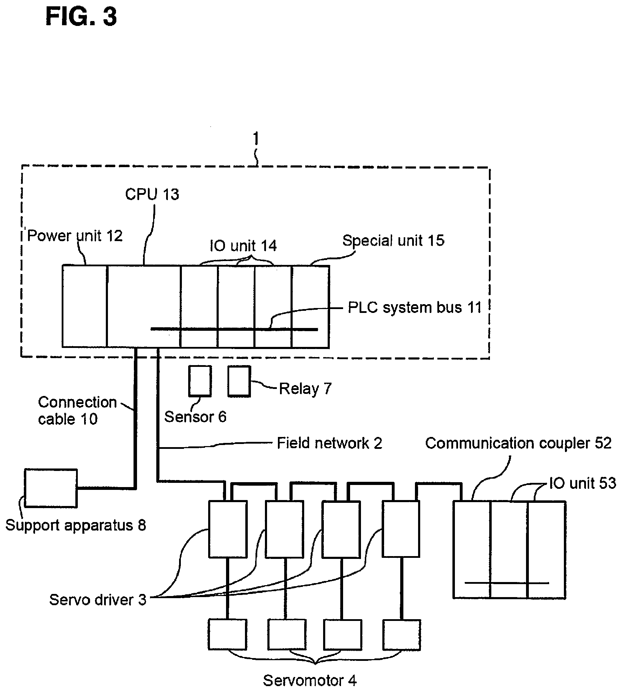

The control system will now be described briefly with reference to Figs. 2 and 3. Fig. 2 is a diagram showing an overview of the control system. Fig. 3 is a diagram showing the structure of the control system in detail.

As shown in Fig. 2, the control system typically includes the controller 1, the servo driver 3, and a control target 5 (servomotor 4). The controller 1 generates a command value (velocity profile), and outputs the command value to the servo driver 3. The servo driver 3 drives the servomotor 4 with a torque determined in accordance with the received command value. This moves the control target 5.

The controller 1 sets a command value (velocity profile) for a control target, such as a machine or equipment. The controller 1 includes a central processing unit (CPU) 13. The CPU 13 includes a microprocessor, a storage unit including a main memory used by the microprocessor, and a communication circuit. The CPU 13 transmits output data, receives input data, and then executes a control program to generate output data using the input data. The CPU 13 repeats this process to control the control target.

The storage unit stores a control program, and a system program for controlling execution of the control program and input and output of input data and output data. The microprocessor executes the system program and the control program stored in the storage unit.

The communication circuit transmits output data and receives input data. The communication circuit in the controller 1 includes a first communication circuit, which transmits output data and receives input data with a controller system bus, and a second communication circuit, which transmits output data and receives input data with a field network 2.

Referring now to Fig. 3, the controller system will be described in more detail. As shown in Fig. 3, the controller system includes the controller 1, servo drivers 3 and a remote IO terminal, which are connected to the controller 1 with a field network 2, and a sensor 6 and a relay 7, which are field devices. The controller 1 is also connected to a support apparatus 8 with, for example, a connection cable 10.

The controller 1 includes a CPU 13, which is responsible for main computation, one or more IO units 14, and a special unit 15. These units can transmit and receive data between them with a PLC system bus 11. These units receive an appropriate voltage provided from a power unit 12. The units included in the controller 1 are provided from the manufacturer of the controller. The PLC system bus 11 may thus be uniquely developed and used by the controller manufacturer. In contrast, the field network 2 may typically comply with the standards available to the public to allow products from different manufacturers to be connectable to the network.

The IO unit 14 performs typical input and output processing. The IO unit 14 receives or outputs binary data, such as data with the on or off state. More specifically, the IO unit 14 obtains information indicating whether a sensor, such as the sensor 6, has detected an object (on-state) or has detected no object (off-state). The IO unit 14 also transmits an activation command (on) or a deactivation command (off) to a designated unit, such as the relay 7 or an actuator.

The special unit 15 has functions that are not supported by the IO unit 14, such as input and output of analogue data, temperature control, and communication with a specific communication scheme.

The field network 2 can carry various data, which is transmitted to and received from the CPU 13. The field network 2 may be industrial Ethernet (registered trademark). Variants of industrial Ethernet (registered trademark) include EtherCAT (registered trademark), Profinet IRT, MECHATROLINK (registered trademark)-III, Powerlink, SERCOS (registered trademark)-III, and CIP Motion. Any of these field networks may be used. The field network 2 may be any field network other than industrial Ethernet. For example, the field network 2 may be DeviceNet or CompoNet/IP (registered trademark) when motion control is not performed. The controller system according to the present embodiment typically uses EtherCAT (registered trademark), which is industrial Ethernet (registered trademark), as the field network 2.

The CPU 13 in the controller 1 may also function as the IO unit 14 or as the servo drivers 3. In this case, the CPU 13 may directly control a control target using its internal functions, without using the IO unit 14 or the servo drivers 3.

The servo drivers 3 are connected to the CPU 13 with the field network 2. Each servo driver 3 drives a servomotor 4 in accordance with a command value provided from the CPU 13. More specifically, each servo driver 3 receives command values (input profiles) including a position command value, a velocity command value, and a torque command value from the controller 1 in constant cycles. The servo driver 3 also receives measured values associated with the operation of the servomotor 4, including the measured values indicating the position, the velocity (typically calculated from a difference between the current position and the previous position), and the torque, from sensors including a position sensor (rotary encoder) and a torque sensor, which are connected to the shaft of each servomotor 4. Each servo driver 3 then sets the command values received from the CPU 13 as target values, and sets the measured values as feedback values, and performs feedback control using the set values. In other words, the servo driver 3 controls the electric current for driving the servomotor 4 to allow the measured values to approach the target values. The servo driver 3 may also be referred to as a servomotor amplifier.

Although Fig. 1 shows the system combining the servomotors 4 and the servo drivers 3, the system may have another structure combining, for example, pulse motors and pulse motor drivers.

The controller system shown in Fig. 1 further includes the remote IO terminal connected to the field network 2. The remote IO terminal basically performs typical input and output processing in the same manner as the IO unit 14. More specifically, the remote IO terminal includes a communication coupler 52 for performing processing associated with data transfer with the field network 2, and one or more IO units 53. These units can transmit and receive data between them with a remote IO terminal bus 51.

Hardware Configuration of Support Apparatus 8

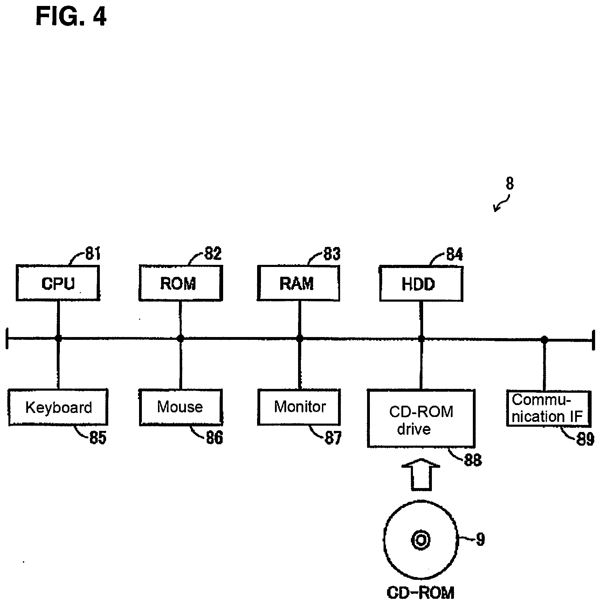

The support apparatus 8 for generating programs to be executed by the controller 1 and performing maintenance of the controller 1 will now be described. Fig. 4 is a schematic diagram showing the hardware configuration of the support apparatus 8. The support apparatus 8 is typically a general-purpose computer. For ease of maintenance, the support apparatus 8 may be a personal computer, such as a notebook computer that can be carried easily.

As shown in Fig. 4, the support apparatus 8 includes a CPU 81, which executes various programs including an operating system (OS), a read-only memory (ROM) 82, which stores the BIOS or other data, a memory RAM 83, which provides a work area for storing data used for the CPU 81 in executing programs, and a hard disk drive (HDD) 84, which stores programs to be executed by the CPU 81 in a nonvolatile manner. The CPU 81 corresponds to the computation unit of the support apparatus 8. The ROM 82, the RAM 83, and the hard disk drive 84 correspond to the storage unit of the support apparatus 8.

The support apparatus 8 further includes a keyboard 85 and a mouse 86, which receive an operation performed by the user, and a monitor 87, which displays information to the user. The support apparatus 8 further includes a communication interface (IF) 89, which allows communication with, for example, the controller 1 (CPU 13).

The programs executed by the support apparatus 8 are stored in a compact disk read-only memory (CD-ROM) 9 and are distributed. The programs stored in the CD-ROM 9 are read by a CD-ROM drive 88 and then stored in, for example, the hard disk drive (HDD) 84. The programs may also be downloaded from an upper host computer with a network.

Although the controller 1 and the support apparatus 8 are separate apparatuses in the present embodiment, the controller 1 may integrate the support apparatus 8. In this case, the controller 1 has the hardware configuration identical to the hardware configuration of the support apparatus 8.

Detailed Structure of Controller 1

The structure of controller 1 will now be described in detail with reference to Fig. 1. Fig. 1 is a block diagram showing the main components of the controller 1.

As shown in Fig. 1, the controller 1 includes an input reception unit 100, a profiling unit (profile calculation unit) 200, and an operation instruction unit 300. The profiling unit 200 includes an evaluation function assignment unit 201, a motion equation assignment/generation unit 202, a condition setting unit 203, and a profile generation unit 204.

The input reception unit 100 receives an instruction from a user through the support apparatus 8, and provides the instruction to the profiling unit 200. The instruction to be received includes, for example, an instruction about a drive time (designated drive time), an initial position, an initial velocity, an evaluation function, an end position, and an end velocity. The input reception unit 100 may further receive information about the limitation conditions, the moving average of time used for proposed method B (described later), or the profile combining ratio used for proposed method C (described later).

The profiling unit 200 generates a position profile (input profile), a velocity profile (input profile), or an acceleration profile (input profile), which are to be provided to the servo driver 3. As described above, the profiling unit 200 includes the evaluation function assignment unit 201, the motion equation assignment/generation unit 202, the condition setting unit 203, and the profile generation unit 204.

The evaluation function assignment unit 201 assigns an evaluation function determined by a user (e.g., an evaluation function for lowering a power peak, a torque peak, or both the power peak and the torque peak).

The evaluation function to be assigned by the evaluation function assignment unit 201 includes an evaluation function for lowering a torque peak, which may be an evaluation function that minimizes the square sum of the torque to lower a torque peak. The evaluation function that minimizes the square sum of the torque is used to stabilize the torque. A stable torque is equilavent to a torque having a less torque peak, and thus is equivalent to lowering a torque peak. Thus, the evaluation function for minimizing the square sum of the torque is an evaluation function for lowering a torque peak.

The power can be written using, for example, the formula: K (coefficient) × velocity × torque. Thus, the evaluation function for lowering a power peak may be an evaluation function for minimizing the square sum of K (coefficient) × velocity × torque.

The evaluation function for generating a profile with a minimum total torque can be written using Formula 1 below.

Formula 1

$$\int \tau^2 dt \quad \cdots (1)$$

The evaluation function for generating a profile with a minimum total power can be written using Formula 2 below.

Formula 2

$$\int (\tau \times V)^2 dt \quad \cdots (2)$$

The evaluation function for generating a profile with both a less total torque and a less total power can be written using Formula 3 below.

$$\int \alpha (\tau^2) + \beta (\tau \times V)^2 dt \quad \cdots (3)$$

In Formula 3, $\alpha$ and $\beta$ are weight coefficients.

The motion equation assignment/generation unit 202 assigns or generates a motion equation for the control target 5. The motion equation assignment/generation unit 202 may automatically generate the motion equation, or may determine the motion equation using a Matrix laboratory (Matlab) or based on numerical analysis performed by an external device and assign the motion equation.

The condition setting unit 203 sets a condition for generating a position profile, a velocity profile, or an acceleration profile. The condition is designated by an instruction received by the input reception unit.

The profile generation unit 204 applies the principle of least action to an evaluation function assigned by the evaluation function assignment unit 201, and to a motion equation assigned or generated by the motion equation assignment/generation unit 202 to generate a velocity profile for lowering a peak (calculation profile, which is for example a profile for lowering a torque peak, a profile for lowering a power peak, or a profile for lowering both the power peak and the torque peak). The profile generation unit 204 then inputs the generated velocity profile into the servo driver 3. The profile generation unit 204 may differentiate the generated velocity profile to generate an acceleration profile, or may integrate the generated velocity profile to generate a position profile.

The principle of least action is Pontryagin's minimum principle, which is used to determine optimal control for shifting a dynamic system from one state to another under limitations associated with the states or associated with the input control.

The operation instruction unit 300 transmits a command to the servo driver 3 in accordance with the velocity profile (or the position profile or the acceleration profile) generated by the profiling unit 200.

Processing by Controller 1

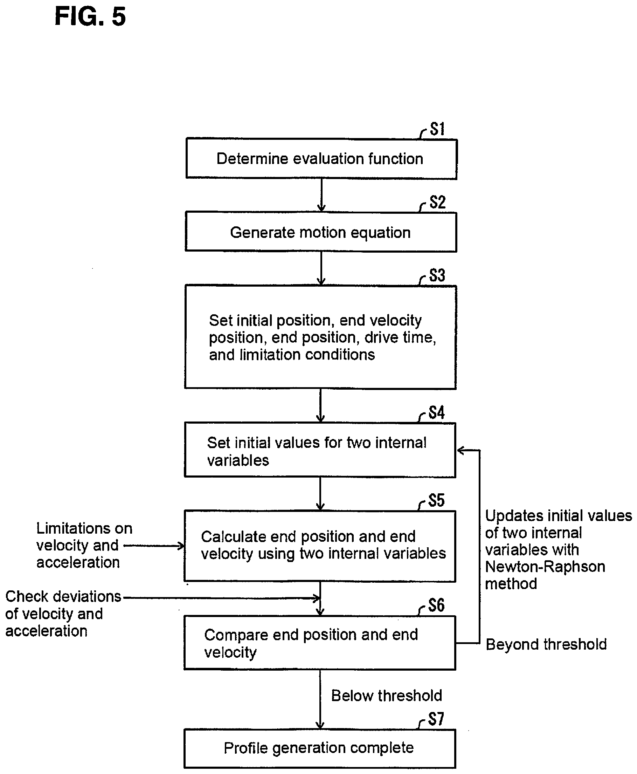

The processing for generating the velocity profile (or the position profile or the acceleration profile) performed by the controller 1 will now be described with reference to Fig. 5. Fig. 5 is a flowchart showing the processing for generating the velocity profile (or the position profile or the acceleration profile) performed by the controller 1.

As shown in Fig. 5, the evaluation function assignment unit 201 included in the controller 1 assigns an evaluation function for lowering a power peak, a torque peak, or both the power peak and the torque peak determined by the user (S1). The motion equation assignment/generation unit 202 then assigns a motion equation for the control target 5 determined using a Matlab or based on numerical analysis performed by an external device, or generates a motion equation for the control target 5 (S2). The condition setting unit 203 sets a condition designated by an instruction received by the input reception unit 100 (S3).

The profile generation unit 204 then generates a Hamiltonian using the evaluation function assigned by the evaluation function assignment unit 201 and the motion equation assigned or generated by the motion equation assignment/generation unit 202, and then sets initial values for two internal variables (S4). The number of internal variables depends on the polynomial degree of the motion equation. For the motion equation that is an equation of the second degree, two variables are set. The variables are used to calculate an end position and an end velocity for the control target 5 (S5). In step S5, limitations may be added to the velocity and the acceleration. This eliminates the process for checking deviations of the velocity and the acceleration, because the limitations on the velocity and the acceleration prevent such deviations. When the end position and the end velocity calculated in step S5 differ from a target position and a target velocity by values not exceeding thresholds at an end time, the profile generation unit 204 generates the position profile, the velocity profile, or the acceleration profile (S7). When the end position and the end velocity calculated in step S5 differ from the target position and the target velocity by values exceeding the thresholds at the end time, the processing returns to step S4. The profile generation unit 204 updates the initial values of the internal variables with, for example, the Newton-Raphson method.

This completes the processing for generating the velocity profile, the position profile, or the acceleration profile performed by the controller 1. An input reception step precedes the processing in the flowchart of Fig. 5. The processing in the flowchart of Fig. 5 corresponds to a profile calculation step and a profile generation step.

Example Profiles Generated by Profiling Unit 200

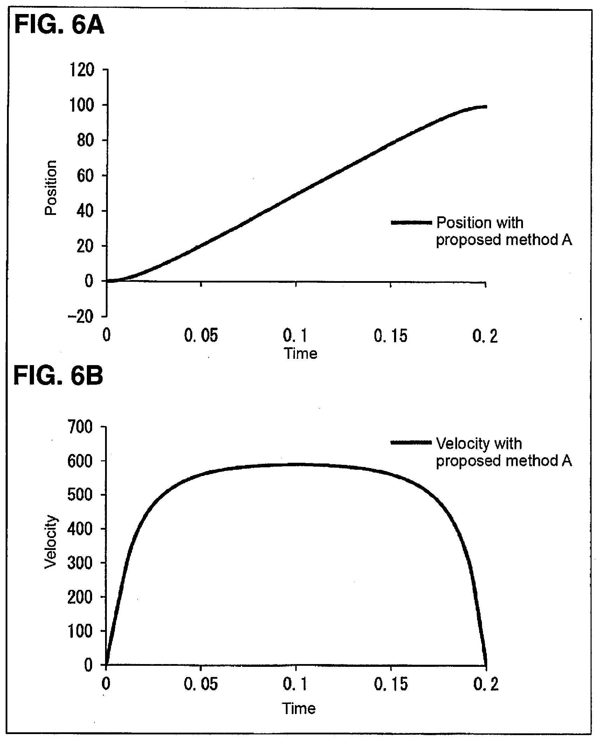

Examples of input profiles (a velocity profile, a position profile, or an acceleration profile) generated by the profiling unit 200 will now be described with reference to Figs. 6A to 15. Although the velocity profile is described below, the position profile or the acceleration profile calculated using the velocity profile as described above may be used.

Proposed Method A

Proposed method A will now be described with reference to Figs. 6A to 10C. With proposed method A, a velocity profile (or a position profile or an acceleration profile) is generated based on the principle of least action, or is calculated based on the principle of least action with the limited velocity or acceleration. The velocity profile (or the position profile or the acceleration profile) generated based on the principle of least action can lower the peak of power consumption and the torque.

Fig. 6B is a diagram showing an example velocity profile (input profile) generated based on the principle of least action (velocity with proposed method A in Fig. 6B). Fig. 6A is a graph showing the relationship between the position of the control target 5 and the time when the velocity profile shown in Fig. 6B is input into the servo driver 3 (position with proposed method A in Fig. 6A). A velocity profile generated simply based on the principle of least action will be referred to as a velocity profile obtained with proposed method A, whereas a profile showing the relationship between the position of the control target 5 and the time corresponding to the velocity profile obtained with proposed method A will be referred to as a position profile obtained with proposed method A.

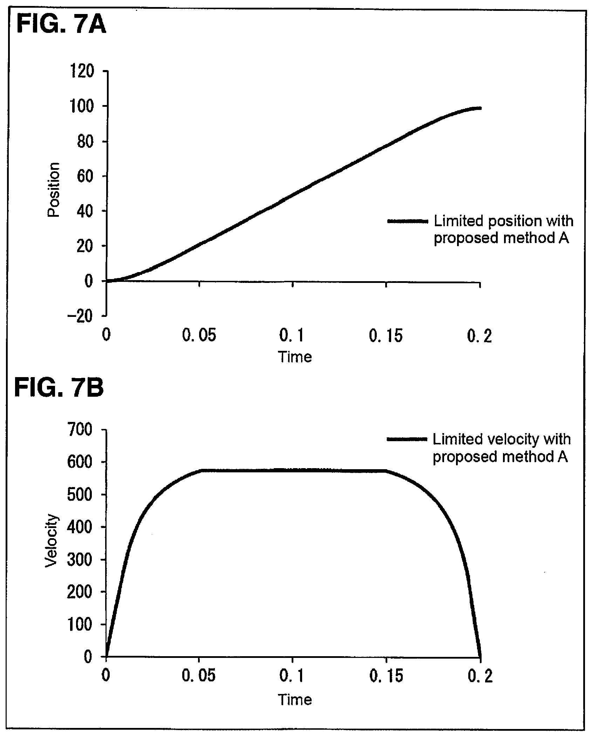

Fig. 7B is a diagram showing a velocity profile (input profile) calculated based on the principle of least action with the limited velocity (limited velocity with proposed method A in Fig. 7B). Fig. 7A is a graph showing the relationship between the position of the control target 5 and the time when the velocity profile shown in Fig. 7B is input into the servo driver 3 (limited position with proposed method A in Fig. 7A). An input profile calculated based on the principle of least action with the limited velocity will be referred to as a limited velocity profile with proposed method A, whereas a profile showing the relationship between the position of the control target 5 and the time corresponding to the limited velocity profile with proposed method A will be referred to as a limited position profile with proposed method A.

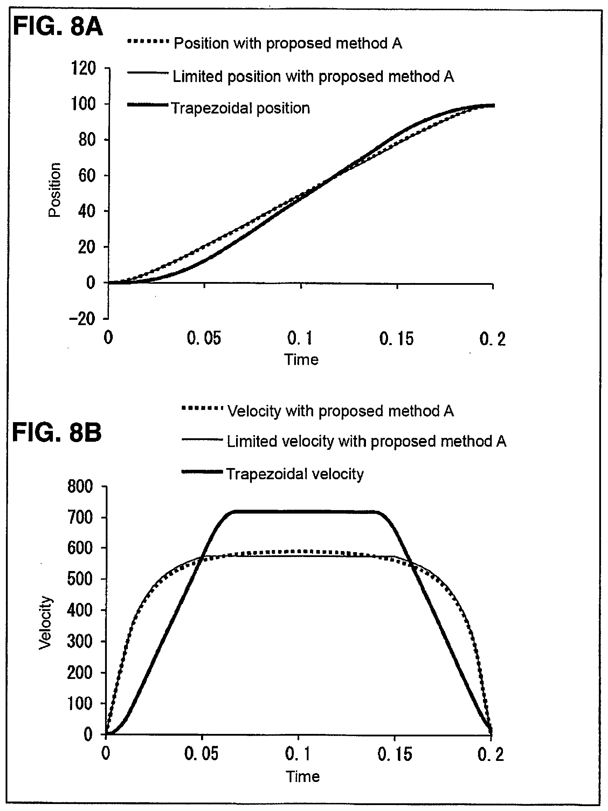

Fig. 8B is a diagram showing the velocity profiles shown in Figs. 6B and 7B, as well as a velocity profile with trapezoidal velocity control (hereafter referred to as a trapezoidal velocity profile). As shown in Fig. 8B, the velocity profile with proposed method A has a steeper leading edge and a steeper trailing edge than the trapezoidal velocity profile, and shows a lower maximum velocity. The limited velocity profile with proposed method A has a flatter locus (flat portion) between the leading edge and the trailing edge than the velocity profile with proposed method A.

Fig. 8A is a graph showing the relationship between the position of the control target 5 and the time when the velocity profiles shown in Fig. 8B are input into the servo driver 3. As shown in Fig. 8A, the position profile with proposed method A and the limited position profile with proposed method A show a more linear relationship between the position and the time than the position profile (trapezoidal position profile) corresponding to the trapezoidal velocity profile. The trapezoidal position profile, and the position profile with proposed method A and the limited position profile with proposed method A share the same end position and the same end time. With the velocity profile with proposed method A, the control target 5 can also move to a predetermined position within a drive time intended by a user, in the same manner as with the trapezoidal velocity profile.

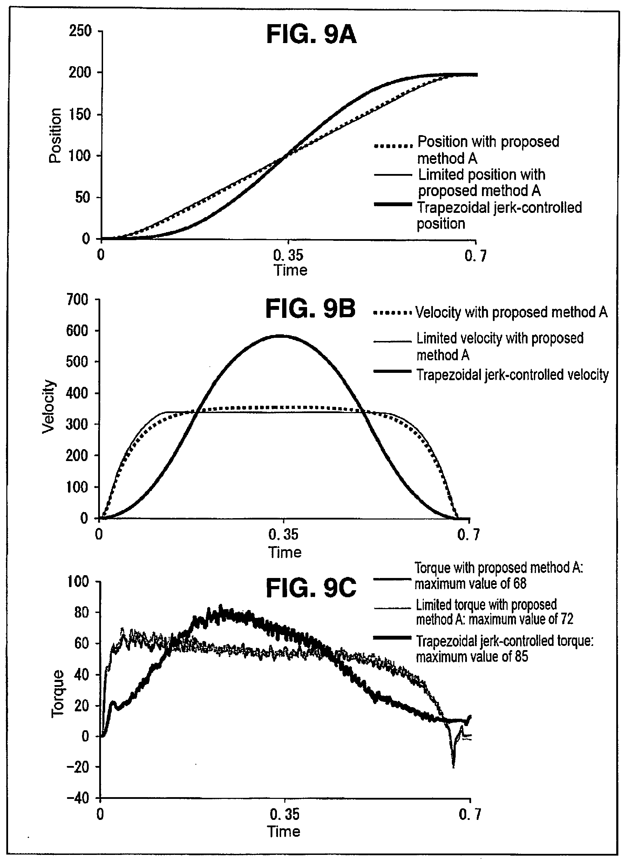

Fig. 9A is a graph showing the relationship between the position of the control target 5 and the time corresponding to velocity profiles shown in Fig. 9B. Fig. 9B is a diagram showing the velocity profiles. Fig 9C is a graph showing the relationship between the torque state and the time corresponding to the velocity profiles shown in Fig. 9B, with proposed method A using an evaluation function for lowering a torque peak. Unlike in Figs. 8A and 8B showing the profiles with simple trapezoidal velocity control, Figs. 9A to 9C show the velocity profiles and their results (positions and torques) with trapezoidal jerk velocity control.

As shown in Fig. 9C, the velocity profile with trapezoidal jerk velocity control has a maximum torque value of about 85 (trapezoidal jerk-controlled torque in Fig. 9C), whereas the velocity profile with proposed method A has a maximum torque value of about 68 (torque with proposed method A in Fig. 9C), and the limited velocity profile with proposed method A has a maximum torque value of about 72 (limited torque with proposed method A in Fig. 9C). The velocity profiles generated with proposed method A can thus lower the maximum torque value, or in other words, lower the torque peak.

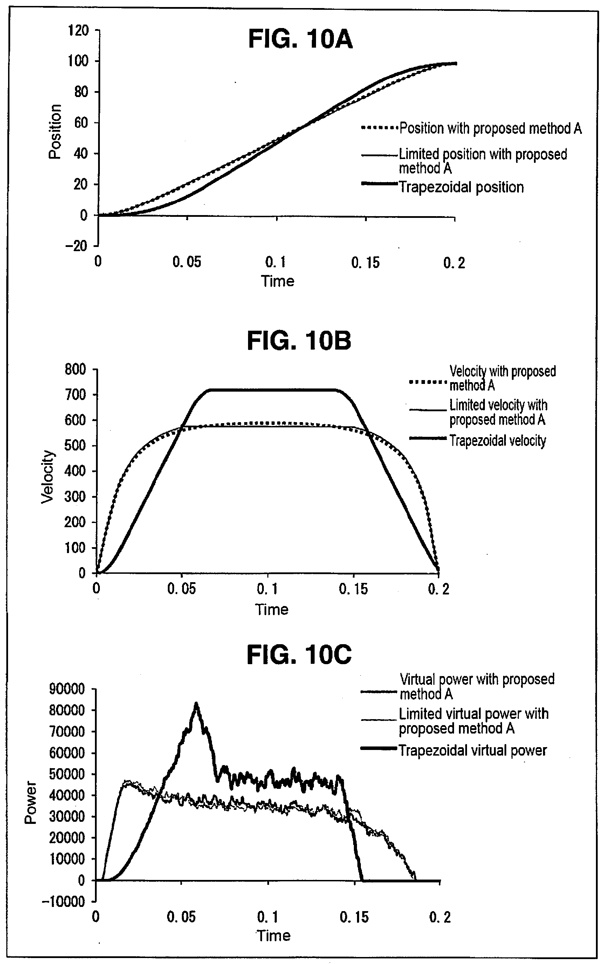

Fig. 10A is a graph showing the relationship between the position of the control target 5 and the time corresponding to velocity profiles shown in Fig. 10B. Fig. 10B is a diagram showing the velocity profiles. Fig 10C is a graph showing the relationship between the power consumption state and the time corresponding to the velocity profiles shown in Fig. 10B, with proposed method A using an evaluation function for lowering a power peak. The power consumption is determined using the formula: velocity × torque. The power consumption is the virtual power in Fig. 10C.

As shown in Fig. 10C, the velocity profile with trapezoidal velocity control has a maximum power consumption value of about 83,500 (trapezoidal virtual power in Fig. 10C), whereas the velocity profile with proposed method A has a maximum power consumption value of about 46,500 (virtual power with proposed method A in Fig. 10C), and the limited velocity profile with proposed method A has a maximum power consumption value of about 45,000 (limited virtual power with proposed method A in Fig. 10C). The velocity profiles generated with proposed method A can thus lower the maximum power consumption value by about 40%, or in other words, lower the power consumption peak. Proposed method A can move the control target 5 to a predetermined position within an intended time, while reducing power consumption.

Proposed Method B

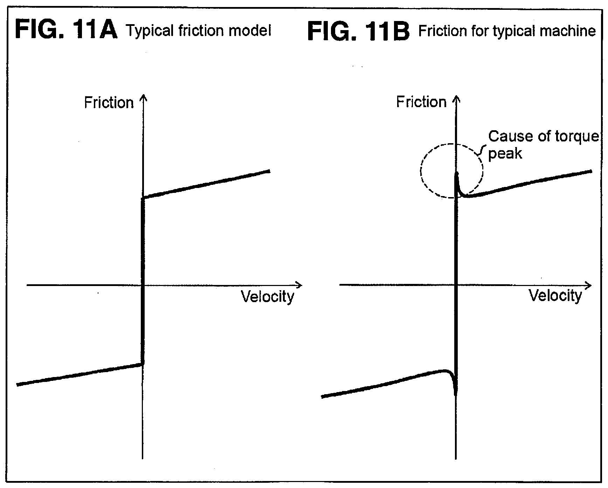

Proposed method B will now be described with reference to Figs. 11A to 12B. The velocity profile generated with proposed method B has a less steep leading edge than the velocity profile generated with proposed method A at the start (when the profile rises).

Normally, a machine moves with a friction that is large in a stationary state and decreases temporarily when the machine starts moving, and then increases gradually as the machine moves at a higher velocity. However, the friction in a stationary state (static friction) is difficult to determine. The friction in a stationary state (static friction) is higher than the friction during operation. When the machine starts moving, the machine uses a larger torque than estimated with a motion equation for the machine. Thus, the torque peak can increase when the machine is actually moved.

This phenomenon will be described with reference to Figs. 11A and 11B. Fig. 11A is a diagram showing the relationship between the velocity and the friction in a typical friction model. Fig. 11B is a diagram showing the relationship between the friction and the velocity for a typical machine. In the friction model shown in Fig. 11A, the friction increases as the velocity increases. However, this model includes no friction in a stationary state (when the velocity is zero). As shown in Fig. 11B, a typical machine actually has a large friction in a stationary state. When the machine movement is estimated using this friction model, the machine can have an unexpected torque peak due to such static friction.

In response to this, proposed method B generates a velocity profile with a curved leading edge with an inflection point at which the curve changes from being concave downward to being concave upward to allow the velocity to increase gradually. More specifically, the velocity profile is first generated with a drive time shortened from a designated drive time, and then the moving average corresponding to the shortened time is calculated. This generates the velocity profile having a less steep leading edge, and having the same drive time and the same moving position as generated with proposed method A.

Figs. 12A and 12B show an example velocity profile generated with proposed method B using an evaluation function for lowering a torque peak, and the corresponding torque state. Fig. 12A is a diagram showing an example velocity profile generated with proposed method B using an evaluation function for lowering a torque peak (velocity with proposed method B in Fig. 12A), and an example velocity profile generated with proposed method A using an evaluation function for lowering a torque peak (velocity based on the principle of least action in Fig. 12A). Fig. 12A also provides an enlarged view of the leading edges of the two profiles. As in the enlarged view, the velocity profile with proposed method B has a less steep leading edge than the profile with a minimum total power.

Fig. 12B is a diagram showing a torque state corresponding to the profile generated with proposed method B using an evaluation function for lowering a torque peak (torque with proposed method B in Fig. 12B), and a torque state corresponding to the profile generated with proposed method A using an evaluation function for lowering a torque peak (torque based on the principle of least action in Fig. 12B). As shown in Fig. 12B, the torque profile corresponding to the profile generated with proposed method A using an evaluation function for lowering a torque peak has a peak at the start (when the profile rises), whereas the torque profile corresponding to the profile generated with proposed method B has no peak at the start. Proposed method B can thus lower a torque peak at the start. Proposed Method C

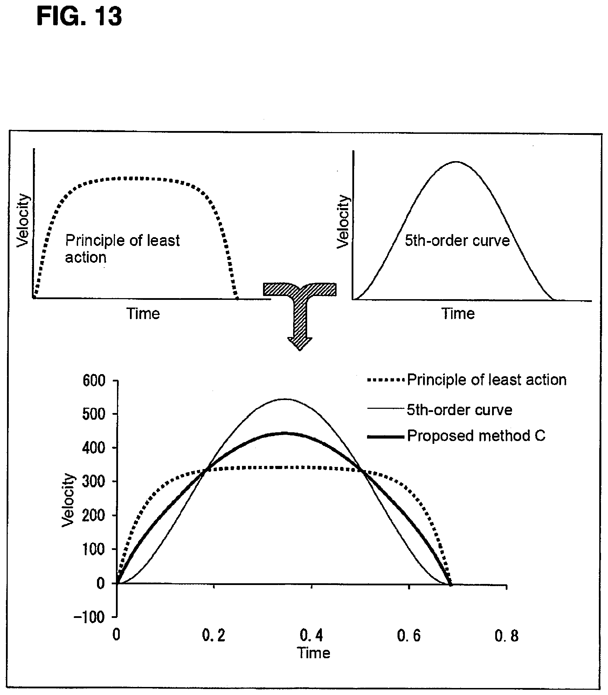

Proposed method C will now be described with reference to Figs. 13 to 15. Proposed method C is used to generate a velocity profile with less vibrations of the machine.

First, a method for generating a velocity profile with less vibrations will be described with reference to Fig. 13. Fig. 13 is a diagram describing the method for generating a velocity profile with less vibrations.

A higher-order curve velocity profile, such as a 5th-order curve velocity profile, can have less vibrations. This velocity profile is combined with the profile generated with proposed method A, limited proposed method A, or proposed method B, which each use an evaluation function for lowering a torque peak. The resultant profile is then divided to generate a velocity profile with less vibrations for lowering a torque peak. Although the velocity profile is a 4th-order or 5th-order curve profile in this example, it may be any order curve equal to or higher than a 4th-order curve.

Fig. 13 shows a velocity profile with proposed method C generated by combining a 5th-order curve velocity profile with a profile generated with proposed method A using an evaluation function for lowering a torque peak, and then dividing the resultant profile by two. The ratio at which the 5th-order curve velocity profile is combined with the profile generated with proposed method A using an evaluation function for lowering a torque peak can be changed to generate, for example, a profile that reduces vibrations more or a profile that lowers the peak more. To reduce vibrations more, for example, the profile may be generated using the formula: (a 5th-order curve velocity profile × 3 + proposed method A or B)/4. To lower the torque peak more, the profile may be generated using the formula: (a 5th-order curve velocity profile + proposed method A or B × 3)/4. The 5th-order curve velocity profile may also be combined with the velocity profile with proposed method A to reduce the influence of static friction described above.

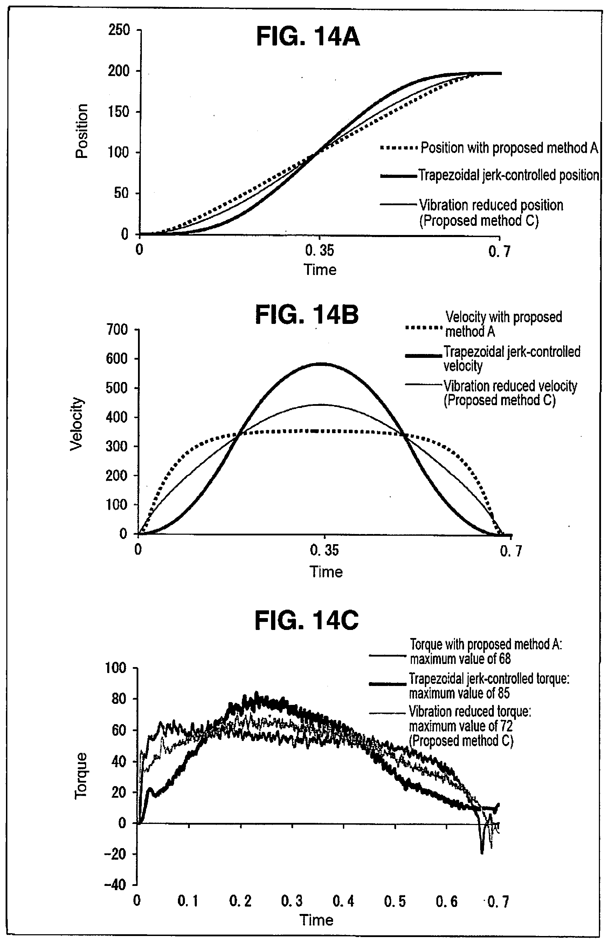

Figs. 14A to 14C are graphs each showing a velocity profile generated with proposed method C using an evaluation function for lowering a torque peak (vibration reduced position, or velocity or torque, in Figs. 14A to 14C), a velocity profile generated with proposed method A using an evaluation function for lowering a torque peak, and a velocity profile generated with trapezoidal jerk velocity control, as well as the corresponding position of the control target 5 and the corresponding torque state.

As shown in Fig. 14C, proposed method C can generate a profile with less steep leading and trailing edges, and thus with less vibrations of the machine.

For the limited velocity, a 4-1-4th order curve velocity profile with a linear portion indicating a constant velocity (or any order curve equal to or higher than a 4th-order curve, such as a 5-1-5th order curve) may be combined with a velocity profile generated with proposed method A (or B) to generate a velocity profile with less vibrations for lowering a torque peak.

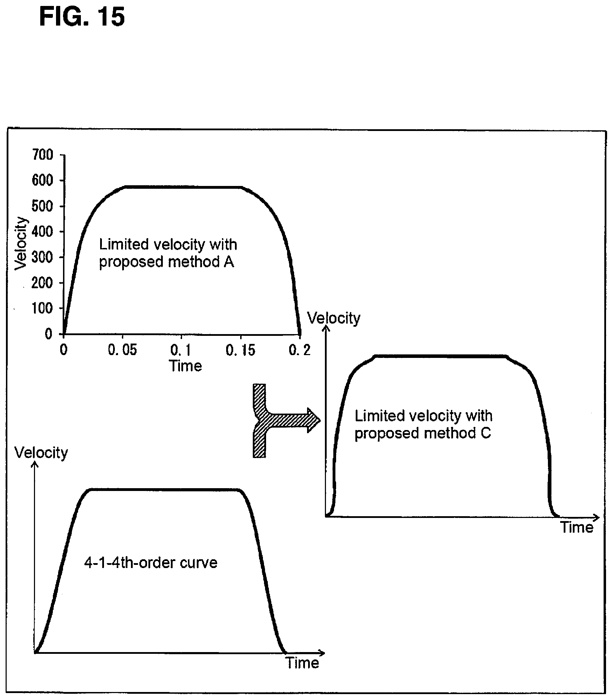

This phenomenon will be described in more detail with reference to Fig. 15. Fig. 15 shows a velocity profile generated by combining a 4-1-4th order curve velocity profile with a limited velocity profile with proposed method A (limited velocity with proposed method A in Fig. 15). As shown in Fig. 15, the 4-1-4th order curve velocity profile is combined with the limited velocity profile with proposed method A at a predetermined ratio to generate a velocity profile (limited velocity with proposed method C in Fig. 15) with less vibrations for lowering a peak, while accommodating the velocity limitations at the leading and trailing edges.

With proposed method C, the ratio at which the higher-order curve velocity profile is combined with the velocity profile with proposed method A (or B) may be designated by a user input received by, for example, the input reception unit 100. This allows the user to select whether to reduce vibrations more or to lower the peak more as described above.

Implementations Using Software

Each functional block of the controller 1 (in particular the profiling unit 200 including the evaluation function assignment unit 201, the motion equation assignment/generation unit 202, the condition setting unit 203, and the profile generation unit 204, and the operation instruction unit 300) may be achieved using a logic circuit (hardware) such as an integrated circuit (IC chip), or using software implemented by a central processing unit (CPU).

When the functional blocks are achieved by using software, the controller 1 includes a CPU, which executes instructions included in a program or software to achieve the functions, a read-only memory (ROM) or a storage device (hereafter referred to as a storage medium), which stores the program and various data readable by a computer (or by the CPU), and a random access memory (RAM), into which the program is expanded. The computer (or CPU) reads the program from the storage medium, and executes the program to achieve one or more aspects of the present invention. The storage medium may be a non-transitory tangible medium, such as a tape, a disk, a card, a semiconductor memory, or a programmable logic circuit. The program may be provided via any transmission medium that can transmit the program to the computer (such as a communication network or a broadcast wave). One or more embodiments of the present invention may be implemented using programs that are electronically transmitted in the form of data signals carried by carrier waves.

REFERENCE SIGNS LIST

| | |
|---|---|
| 1 | controller (profile generation apparatus) |
| 3 | servo driver |
| 4 | servomotor |
| 5 | control target |
| 8 | support apparatus |
| 100 | input reception unit |
| 200 | profiling unit (profile calculation unit) |
| 201 | evaluation function assignment unit |
| 202 | motion equation assignment/generation unit |
| 203 | condition setting unit |
| 204 | profile generation unit |
| 300 | operation instruction unit |

**Claims**

1. A profile generation apparatus (1) for generating an input profile used in controlling a machine, the apparatus comprising:

   an input reception unit (100) configured to receive input of a designated drive time from a user, the designated drive time being a time taken by a control target (5) to move to a predetermined position;

a profile calculation unit (200) configured to calculate a calculation profile including a leading edge portion, a flat portion, and a trailing edge portion, the calculation profile being determined based on a principle of least action to minimize a total torque or a total power used to control the control target (5) or to reduce the total torque and the total power, the calculation profile causing a velocity to be zero when the designated drive time received by the input reception unit (100) passes; and
a profile generation unit (204) configured to generate, as the input profile, a velocity profile indicating a relationship between a velocity of the control target (5) and a time based on the calculation profile calculated by the profile calculation unit (200),
**characterized in that**
the profile generation unit (204) is configured to generate, based on the calculation profile calculated by the profile calculation unit (200), the input profile by shortening the designated drive time and calculating a moving average corresponding to the shortened drive time, a leading edge portion of the generated input profile having an inflection point at which the leading edge portion changes from being concave downward to being concave upward.

**2.** The profile generation apparatus (1) according to claim 1, wherein
the input reception unit (100) receives input of an evaluation function from the user, and
the profile calculation unit (200) calculates the calculation profile to minimize the total torque or the total power used to control the control target (5) or to reduce the total torque and the total power using the evaluation function.

**3.** The profile generation apparatus (1) according to claim 1 or claim 2, wherein
the profile generation unit (204) generates the input profile by combining the leading edge portion of the calculation profile calculated by the profile calculation unit (200) with a leading edge portion of a 4th or higher order curve at a predetermined ratio, and combining the trailing edge portion of the calculation profile with a trailing edge portion of the 4th or higher order curve at the predetermined ratio.

**4.** The profile generation apparatus (1) according to claim 3, wherein
the input reception unit (100) receives input of the ratio from the user.

**5.** The profile generation apparatus (1) according to any one of claims 1 to 4, wherein
the profile generation unit (204) at least either differentiates the generated velocity profile to generate an acceleration profile showing a relationship between an acceleration of the control target (5) and a time, or integrates the generated velocity profile to generate a position profile showing a relationship between a position of the control target (5) and a time.

**6.** A control method for a profile generation apparatus (1) that generates an input profile used in controlling a machine, the control method comprising:

receiving input of a designated drive time from a user, the designated drive time being a time taken by a control target (5) to move to a predetermined position;
calculating a calculation profile including a leading edge portion, a flat portion, and a trailing edge portion, the calculation profile being determined based on a principle of least action to minimize a total torque or a total power used to control the control target (5) or to reduce the total torque and the total power, the calculation profile causing a velocity to be zero when the designated drive time received in the step of receiving the input passes; and
generating, as the input profile, a velocity profile indicating a relationship between a velocity of the control target (5) and a time based on the calculation profile calculated in the step of calculating the profile,
**characterized in that**
the method further comprises generating, based on the calculated calculation profile, the input profile by shortening the designated drive time and calculating a moving average corresponding to the shortened drive time, a leading edge portion of the generated input profile having an inflection point at which the leading edge portion changes from being concave downward to being concave upward.

**7.** A computer program comprising instructions which, when the program is executed by a computer, cause the computer to carry out the method of claim 6.

**8.** A non-transitory computer-readable storage medium storing the control program according to claim 7.

## Patentansprüche

**1.** Profilerzeugungsvorrichtung (1) zum Erzeugen eines Eingabeprofils, das zum Steuern einer Maschine verwendet wird, wobei die Vorrichtung umfasst:

eine Eingabeempfangseinheit (100), die dazu eingerichtet ist, eine Eingabe einer angegebenen Antriebszeit von einem Benutzer zu empfangen, wobei die angegebene Antriebszeit eine Zeit ist, die ein zu steuerndes Objekt (5) benötigt, um sich zu einer vorbestimmten Position zu bewegen;

eine Profilberechnungseinheit (200), die dazu eingerichtet ist, ein Berechnungsprofil, aufweisend einen Führungskantenabschnitt, einem flachen Abschnitt und einen Hinterkantenabschnitt zu berechnen, wobei das Berechnungsprofil basierend auf einem Prinzip der kleinsten Wirkung bestimmt wird, um ein Gesamtdrehmoment oder eine Gesamtleistung zum Steuern des zu steuernden Objekts (5) zu minimieren oder um das Gesamtdrehmoment und die Gesamtleistung zu reduzieren, wobei das Berechnungsprofil bewirkt, dass eine Geschwindigkeit Null ist, wenn die von der Eingabeempfangseinheit (100) empfangene angegebene Antriebszeit verstrichen ist; und

eine Profilerzeugungseinheit (204), die dazu eingerichtet ist, als das Eingabeprofil ein Geschwindigkeitsprofil zu erzeugen, das eine Beziehung zwischen einer Geschwindigkeit des zu steuernden Objekts (5) und einer Zeit basierend auf dem von der Profilberechnungseinheit (200) berechneten Berechnungsprofil angibt,

**dadurch gekennzeichnet, dass**

die Profilerzeugungseinheit (204) dazu eingerichtet ist, basierend auf dem durch die Profilberechnungseinheit (200) berechneten Berechnungsprofil, das Eingabeprofil durch Verkürzen der angegebenen Antriebszeit und durch Berechnen eines gleitenden Mittelwerts entsprechend der verkürzten Antriebszeit zu erzeugen, wobei ein Führungskantenabschnitt des erzeugten Eingabeprofils einen Wendepunkt aufweist, an welchem sich der Führungskantenabschnitt von konkav nach unten zu konkav nach oben ändert.

**2.** Profilerzeugungsvorrichtung (1) gemäß Anspruch 1, wobei
die Eingabeempfangseinheit (100) eine Eingabe einer Bewertungsfunktion von dem Benutzer empfängt, und
die Profilberechnungseinheit (200) das Berechnungsprofil berechnet, um das Gesamtdrehmoment oder die Gesamtleistung, die zum Steuern des zu steuernden Objekts (5) verwendet wird, zu minimieren, oder um das Gesamtdrehmoment und die Gesamtleistung unter Verwendung der Bewertungsfunktion zu reduzieren.

**3.** Profilerzeugungsvorrichtung (1) gemäß Anspruch 1 oder Anspruch 2, wobei
die Profilerzeugungseinheit (204) das Eingabeprofil durch Kombinieren des Führungskantenabschnitts des durch die Profilberechnungseinheit (200) berechneten Berechnungsprofils mit einem Führungskantenabschnitt einer Kurve der vierten oder höheren Ordnung bei einem vorbestimmten Verhältnis und durch Kombinieren des Hinterkantenabschnitts des Berechnungsprofils mit einem Hinterkantenabschnitt der Kurve vierter oder höherer Ordnung bei dem vorbestimmten Verhältnis, erzeugt.

**4.** Profilerzeugungsvorrichtung (1) gemäß Anspruch 3, wobei
die Eingabeempfangseinheit (100) eine Eingabe des Verhältnisses von dem Benutzer empfängt.

**5.** Profilerzeugungsvorrichtung (1) gemäß einem der Ansprüche 1 bis 4, wobei
die Profilerzeugungseinheit (204) zumindest entweder das erzeugte Geschwindigkeitsprofil ableitet, um ein Beschleunigungsprofil zu erzeugen, das eine Beziehung zwischen einer Beschleunigung des zu steuernden Objekts (5) und einer Zeit zeigt, oder das erzeugte Geschwindigkeitsprofil integriert, um ein Positionsprofil zu erzeugen, das eine Beziehung zwischen einer Position des zu steuernden Objekts (5) und einer Zeit zeigt.

**6.** Steuerverfahren für eine Profilerzeugungsvorrichtung (1), die ein Eingabeprofil erzeugt, das beim Steuern einer Maschine verwendet wird, wobei das Steuerverfahren umfasst:

Empfangen einer Eingabe einer angegebenen Antriebszeit von einem Benutzer, wobei die angegebene Antriebszeit eine Zeit ist, die ein zu steuerndes Objekt (5) benötigt, um sich zu einer vorbestimmten Position zu bewegen;

Berechnen eines Berechnungsprofils, das einen Führungskantenabschnitt, einen flachen Abschnitt und einen Hinterkantenabschnitt aufweist, wobei das Berechnungsprofil basierend auf einem Prinzip der kleinsten Wirkung bestimmt wird, um ein Gesamtdrehmoment oder eine Gesamtleistung zum Steuern des zu steuernden Objekts (5) zu minimieren oder um das Gesamtdrehmoment und die Gesamtleistung zu reduzieren, wobei das Berechnungsprofil bewirkt, dass eine Geschwindigkeit Null ist, wenn die angegebene Antriebszeit, die in dem Schritt des Empfangens der Eingabe empfangen wird, verstrichen ist; und

Erzeugen eines Geschwindigkeitsprofils als das Eingabeprofil, das eine Beziehung zwischen einer Geschwindigkeit des zu steuernden Objekts (5) und einer Zeit basierend auf dem im Schritt des Berechnens des Profils berechneten Berechnungsprofil angibt;

**dadurch gekennzeichnet, dass**

das Verfahren ferner Erzeugen des Eingabeprofils umfasst, basierend auf dem berechneten Berechnungsprofil, durch Verkürzen der angegebenen Antriebszeit und durch Berechnen eines gleitenden Mittelwerts entsprechend der verkürzten Antriebszeit, wobei ein Führungskantenabschnitt des erzeugten Eingabeprofils einen Wendepunkt aufweist, an welchem sich der Führungskantenabschnitt von konkav nach unten zu konkav nach oben ändert.

7. Computerprogramm, umfassend Anweisungen, die, wenn das Programm von einem Computer ausgeführt wird, bewirken, dass der Computer das Verfahren nach Anspruch 6 durchführt.

8. Nicht-transitorisches computerlesbares Speichermedium, welches das Steuerprogramm gemäß Anspruch 7 speichert.

**Revendications**

1. Appareil de génération de profil (1) pour générer un profil d'entrée utilisé dans la commande d'une machine, l'appareil comprenant :

une unité de réception d'entrée (100) configurée pour recevoir une entrée d'un temps d'entraînement désigné à partir d'un utilisateur, le temps d'entraînement désigné étant un temps pris par une cible de commande (5) pour se déplacer à une position prédéterminée ;
une unité de calcul de profil (200) configurée pour calculer un profil de calcul incluant une partie de bord avant, une partie plate, et une partie de bord arrière, le profil de calcul étant déterminé sur la base d'un principe de moindre action pour rendre minimal un couple total ou une puissance totale utilisé pour commander la cible de commande (5) ou pour réduire le couple total et la puissance totale, le profil de calcul amenant une vitesse à être nulle lorsque le temps d'entraînement désigné reçu par l'unité de réception d'entrée (100) est passé ; et
une unité de génération de profil (204) configurée pour générer, comme profil d'entrée, un profil de vitesse indiquant une relation entre une vitesse de la cible de commande (5) et un temps basé sur le profil de calcul calculé par l'unité de calcul de profil (200),
**caractérisé en ce que**
l'unité de génération de profil (204) est configurée pour générer, sur la base du profil de calcul calculé par l'unité de calcul de profil (200), le profil d'entrée par réduction du temps d'entraînement désigné et calcul d'une moyenne de déplacement correspondant au temps d'entraînement réduit, une partie de bord avant du profil d'entrée généré ayant un point d'inflexion au niveau duquel la partie de bord avant passe de concave vers le bas à concave vers le haut.

2. Appareil de génération de profil (1) selon la revendication 1, dans lequel
l'unité de réception d'entrée (100) reçoit une entrée d'une fonction d'évaluation à partir de l'utilisateur, et l'unité de calcul de profil (200) calcule le profil de calcul pour rendre minimal le couple total ou la puissance totale utilisé pour commander la cible de commande (5) ou pour réduire le couple total et la puissance totale à l'aide de la fonction d'évaluation.

3. Appareil de génération de profil (1) selon la revendication 1 ou la revendication 2, dans lequel
l'unité de génération de profil (204) génère le profil d'entrée par combinaison de la partie de bord avant du profil de calcul calculé par l'unité de calcul de profil (200) avec une partie de bord avant d'une courbe d'ordre 4 ou supérieur à un rapport prédéterminé, et combinaison de la partie de bord arrière du profil de calcul avec une partie de bord arrière de la courbe d'ordre 4 ou supérieur au rapport prédéterminé.

4. Appareil de génération de profil (1) selon la revendication 3, dans lequel
l'unité de réception d'entrée (100) reçoit une entrée du rapport à partir de l'utilisateur.

5. Appareil de génération de profil (1) selon l'une quelconque des revendications 1 à 4, dans lequel
l'unité de génération de profil (204) au moins soit dérive le profil de vitesse généré pour générer un profil d'accélération indiquant une relation entre une accélération de la cible de commande (5) et une heure, soit intègre le profil de vitesse généré pour générer un profil de position indiquant une relation entre une position de la cible de commande (5) et un temps.

6. Procédé de commande pour un appareil de génération de profil (1) qui génère un profil d'entrée utilisé dans la commande d'une machine, le procédé de commande comprenant :

la réception d'une entrée d'un temps d'entraînement désigné à partir d'un utilisateur, le temps d'entraînement désigné étant un temps pris par une cible de commande (5) pour se déplacer à une position prédéterminée ;
le calcul d'un profil de calcul incluant une partie de bord avant, une partie plate, et une partie de bord arrière, le profil de calcul étant déterminé sur la base d'un principe de moindre action pour rendre minimal un couple total ou une puissance totale utilisé pour commander la cible de commande (5) ou pour réduire le couple total et la puissance totale, le profil de calcul amenant une vitesse à être nulle lorsque le temps d'entraînement désigné reçu à l'étape de réception de l'entrée est passé ; et

la génération, comme profil d'entrée, d'un profil de vitesse indiquant une relation entre une vitesse de la cible de commande (5) et un temps basé sur le profil de calcul calculé à l'étape de calcul du profil,

**caractérisé en ce que**

le procédé comprend en outre la génération, sur la base du profil de calcul calculé, du profil d'entrée par réduction du temps d'entraînement désigné et calcul d'une moyenne de déplacement correspondant au temps d'entraînement réduit, une partie de bord avant du profil d'entrée généré ayant un point d'inflexion au niveau duquel la partie de bord avant passe de concave vers le bas à concave vers le haut.

**7.** Programme informatique comprenant des instructions qui, lorsque le programme est exécuté par un ordinateur, amènent l'ordinateur à effectuer le procédé de la revendication 6.

**8.** Moyen de stockage lisible par ordinateur non transitoire stockant le programme de commande selon la revendication 7.

# FIG. 1

1
Controller
8
Support apparatus
100
Input reception unit
200
Profiling unit
201
Evaluation function assignment unit
202
Motion equation assignment/generation unit
203
Condition setting unit
204
Profile generation unit
300
Operation instruction unit
3
Servo driver

# FIG. 2

1
Controller
Command value
3
Servo driver
Torque
5
Control target (Servomotor 4)

**FIG. 3**

1
CPU 13
Power unit 12
IO unit 14
Special unit 15
PLC system bus 11
Relay 7
Sensor 6
Connection cable 10
Field network 2
Communication coupler 52
IO unit 53
Support apparatus 8
Servo driver 3
Servomotor 4

FIG. 4

8
81
CPU
82
ROM
83
RAM
84
HDD
Keyboard
85
Mouse
86
Monitor
87
CD-ROM drive
88
Commu-nication IF
89
9
CD-ROM

# FIG. 5

S1
Determine evaluation function
S2
Generate motion equation
S3
Set initial position, end velocity position, end position, drive time, and limitation conditions
S4
Set initial values for two internal variables
S5
Limitations on velocity and acceleration
Calculate end position and end velocity using two internal variables
Updates initial values of two internal variables with Newton-Raphson method
Check deviations of velocity and acceleration
S6
Compare end position and end velocity
Beyond threshold
Below threshold
S7
Profile generation complete

FIG. 6A
Position
120
100
80
60
40
20
0
-20
0
0. 05
0. 1
0. 15
0. 2
Time
Position with
proposed method A
FIG. 6B
Velocity
700
600
500
400
300
200
100
0
0
0. 05
0. 1
0. 15
0. 2
Time
Velocity with
proposed method A

FIG. 7A
120
100
80
60
40
20
0
−20
Position
Limited position with proposed method A
0
0. 05
0. 1
0. 15
0. 2
Time
FIG. 7B
700
600
500
400
300
200
100
0
Velocity
Limited velocity with proposed method A
0
0. 05
0. 1
0. 15
0. 2
Time

FIG. 8A
Position with proposed method A
Limited position with proposed method A
Trapezoidal position
Position
120
100
80
60
40
20
0
-20
0
0. 05
0. 1
0. 15
0. 2
Time
FIG. 8B
Velocity with proposed method A
Limited velocity with proposed method A
Trapezoidal velocity
Velocity
800
700
600
500
400
300
200
100
0
0
0. 05
0. 1
0. 15
0. 2
Time

FIG. 9A
250
200
150
100
50
0
Position
0
0.35
0.7
Time
Position with proposed method A
Limited position with proposed method A
Trapezoidal jerk-controlled position
FIG. 9B
700
600
500
400
300
200
100
0
Velocity
0
0.35
0.7
Time
Velocity with proposed method A
Limited velocity with proposed method A
Trapezoidal jerk-controlled velocity
FIG. 9C
100
80
60
40
20
0
-20
-40
Torque
0
0.35
0.7
Time
Torque with proposed method A: maximum value of 68
Limited torque with proposed method A: maximum value of 72
Trapezoidal jerk-controlled torque: maximum value of 85

FIG. 10A
Position
Time
Position with proposed method A
Limited position with proposed method A
Trapezoidal position
120
100
80
60
40
20
0
-20
0
0.05
0.1
0.15
0.2
FIG. 10B
Velocity
Time
Velocity with proposed method A
Limited velocity with proposed method A
Trapezoidal velocity
800
700
600
500
400
300
200
100
0
0
0.05
0.1
0.15
0.2
FIG. 10C
Power
Time
Virtual power with proposed method A
Limited virtual power with proposed method A
Trapezoidal virtual power
90000
80000
70000
60000
50000
40000
30000
20000
10000
0
-10000
0
0.05
0.1
0.15
0.2

FIG. 11A Typical friction model
Friction
Velocity
FIG. 11B Friction for typical machine
Friction
Cause of torque peak
Velocity

FIG. 12A
Velocity
400
350
300
250
200
150
100
50
0
0
0.35
0.7
Time
Velocity with proposed method B
Velocity based on principle of least action
Enlarged
Velocity
400
350
300
250
200
150
100
50
0
0
0.1
Time
Velocity with proposed method B
Velocity based on principle of least action
FIG. 12B
Torque
80
60
40
20
0
-20
-40
0
0.35
0.7
Time
Torque with proposed method B: maximum value of 68
Torque based on principle of least action: maximum value of 74

# FIG. 13

Velocity
Principle of least action
Time
Velocity
5th-order curve
Time
600
500
400
300
200
100
0
−100
Velocity
0
0.2
0.4
0.6
0.8
Time
Principle of least action
5th-order curve
Proposed method C

FIG. 14A
Position
250
200
150
100
50
0
0
0.35
0.7
Time
Position with proposed method A
Trapezoidal jerk-controlled position
Vibration reduced position
(Proposed method C)
FIG. 14B
Velocity
700
600
500
400
300
200
100
0
0
0.35
0.7
Time
Velocity with proposed method A
Trapezoidal jerk-controlled velocity
Vibration reduced velocity
(Proposed method C)
FIG. 14C
Torque
100
80
60
40
20
0
-20
-40
0
0.1
0.2
0.3
0.4
0.5
0.6
0.7
Time
Torque with proposed method A: maximum value of 68
Trapezoidal jerk-controlled torque: maximum value of 85
Vibration reduced torque: maximum value of 72
(Proposed method C)

# FIG. 15

700
600
500
400
300
200
100
0
Velocity
0
0. 05
0. 1
0. 15
0. 2
Time
Limited velocity with
proposed method A
Velocity
Limited velocity with
proposed method C
Time
Velocity
4-1-4th-order curve
Time

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011042049 A1
- JP 2014517673 W
- JP 2012173900 A


### Non-patent literature cited in the description


- **KIM DOANG NGUYEN et al.** On Algorithms for Planning S-Curve Motion Profiles. *International Journal of Advanced Robotic Systems,* 01 March 2008